# EUROPÄISCHE PATENTSCHRIFT

(11) **EP 2 497 192 B1**
(45) Veröffentlichungstag und Bekanntmachung des Hinweises auf die Patenterteilung: **20.04.2016**
(21) Anmeldenummer: 10810822.6
(22) Anmeldetag: 23.12.2010
(51) Int. Cl.: H04B 3/54

(54) **VERFAHREN ZUM BESTIMMEN VON NOTCHING-PARAMETERN IN EINEM PLC-SYSTEM SOWIE EIN PLC-SYSTEM**
METHOD FOR DETERMINING NOTCHING PARAMETERS IN A PLC SYSTEM AND PLC SYSTEM
MÉTHODE POUR LA DÉTERMINATION DE PARAMÈTRES DE FILTRE COUPE-BANDE POUR UN SYSTÈME CPL ET SYSTÈME CPL

(30) Priorität: 23.12.2009 DE 102009060502; 21.07.2010 DE 102010031863
(43) Veröffentlichungstag der Anmeldung: 12.09.2012
(73) Patentinhaber: Power Plus Communications AG, 68167 Mannheim (DE)
(72) Erfinder: RINDCHEN, Markus, 67574 Osthofen (DE)
(74) Vertreter: Patent- und Rechtsanwälte Ullrich & Naumann
(86) Internationale Anmeldenummer: PCT/DE2010/001510
(87) Internationale Veröffentlichungsnummer: WO 2011/076190

(56) Entgegenhaltungen:
- EP-A1- 1 643 658
- WO-A2-01/78242
- DE-T2- 60 312 839
- SCHWAGER A ET AL: "Potential of broadband power line home networking", CONSUMER COMMUNICATIONS AND NETWORKING CONFERENCE, 2005. CCNC. 2005 SECOND IEEE, IEEE, PISCATAWAY, NJ, USA, 3. Januar 2005 (2005-01-03), Seiten 359-363, XP010787664, DOI: DOI:10.1109/CCNC.2005.1405197 ISBN: 978-0-7803-8784-3

## Beschreibung

Die Erfindung betrifft ein Verfahren zum Bestimmen von Notching-Parametern für ein PLC (Powerline Communication)-Signal in einem PLC-System, wobei durch das Notching gezielt Frequenzbereiche im PLC-Signal ausgelassen werden und wobei die Notching-Parameter derart gewählt werden, dass eine Interferenz des PLC-Signals mit einem Funksignal weitgehend vermieden wird.

Die Erfindung betrifft ferner ein PLC-System mit einer Konfigurationseinheit zum Bestimmen von Notching-Parametern, wobei mindestens ein Knoten des PLC-Systems durch die Notching-Parameter derart beeinflussbar ist, dass in dem durch den Knoten ausgesendeten PLC-Signal zur Vermeidung einer Interferenz des durch den Knoten ausgesendeten PLC-Signals mit einem Funksignal gezielt Frequenzbereiche ausgelassen sind.

Bei BPL (Breitband Powerline)-Kommunikation werden Daten über das übliche Stromversorgungsnetzwerk übertragen. Es kommt insbesondere in Gebäuden zum Einsatz, kann jedoch auch zur Bereitstellung der "letzten Meile", d.h. die Anbindung von Gebäuden an ein Kommunikationsnetz, genutzt werden. Das BPL-Sende-Spektrum bewegt sich im Allgemeinen in einem Bereich von 2 bis 30 MHz und überschneidet sich daher mit den Nutzfrequenzen verschiedener Funkdienste. Dies kann zu Kollisionsfällen zwischen den Diensten und BPL-Anwendungen führen.

Daher werden in der Praxis bestimmte Frequenzbereiche ausgeblendet (Notching). Dieses Verfahren wird seit einiger Zeit in den relevanten EMV (Elektromagnetische Verträglichkeit)-Gremien diskutiert. Die Frequenzen schützenswerter Funkdienste werden im BPL-Signal ausgeblendet, um eine Kollision zu vermeiden und eine Koexistenz von BPL und Funkdiensten zu garantieren.

Beim Notching können grundsätzlich zwei Ausprägungen unterschieden werden:
- 1.: Statisches Notching:
Hierbei werden im BPL-Signal Frequenzbereich permanent ausgeblendet, um besonders sensitive bzw. sicherheitsrelevante Dienste zu schützen.
- 2.: Dynamisches Notching:
Hierbei werden im BPL-Signal nur dann Frequenzbereiche ausgeblendet, wenn tatsächlich ein Nutzsignal des Funkdienstes vorliegt.

Dynamisches Notching wird derzeit nur für Frequenzen des Kurzwellenrundfunks diskutiert, da hier die Ausbreitung des Dienstes verschiedenen physikalischen Phänomenen unterliegt, die schwer vorherzusagen sind. Gegenüber dem statischen Notching von Rundfunksendern, kann dynamisches Notching in diesem Umfeld das nutzbare BPL-Frequenzspektrum um ca. 20% erhöhen.

Die Herausforderung liegt jedoch in der Detektion eines "schützenswerten" Kurzwellensignals, das die notwendige Empfangsfeldstärke für einen handelsüblichen Empfänger aufweist.

Ein mögliches Konzept zur Detektion solcher Signale wird in der DE 603 12 839 T2 beschrieben. Für das Verfahren wird vor Start der PLC-Aktivität das vollständige, durch das PLC-System potentiell genutzte Frequenzspektrum gescannt und vorhandene Funkquellen detektiert. Alternativ oder zusätzlich ist beschrieben, dass Lücken im Zeitrahmen oder im Frequenzband zur Detektion von Funksendern genutzt werden. Unter Lücken im Zeitrahmen sind Zeiten ohne PLC-Aktivität zu verstehen; Lücken im Frequenzband sind für die PLC-Kommunikation nicht genutzte Frequenzbereiche. Zur weiteren Verbesserung der Ermittlungsmechanismen können zusätzlich spezielle Korrelationsverfahren verwendet werden.

Nachteilig an dem in der DE 603 12 839 T2 Verfahren ist, dass es lediglich dann anwendbar ist, wenn keine PLC-Aktivität vorhanden ist. Dies führt dazu, dass das gesamte PLC-System für die Detektion abgeschaltet oder deaktiviert sein muss. Ändert sich ein Nutzsignal im laufenden Betrieb des Systems, so kann hierauf nicht eingegangen werden. Dies kann beispielsweise dann der Fall sein, wenn ein Kurzwellenradiosender in Folge von atmosphärischen Störungen bei der Detektion nur sehr schlecht empfangbar war.

Ein anderes Konzept, bei dem im laufenden Betrieb ein Schutz für Kurzwellensender erreicht wird, ist in der EP 1 643 658 A1 offenbart. Zur Vermeidung einer gegenseitigen Interferenz von mehreren parallel betriebenen PLC-Systemen wird das SNR (Signal-zu-Rausch-Verhältnis) bestimmt und Frequenzen mit schlechtem SNR aus dem PLC-Signal ausgenommen. Durch diesen Koexistenzmechanismus wird auch ein Schutz für Kurzwellenradiosender erreicht. Nachteilig hierbei ist, dass ein Kurzwellensender eine relativ hohe Feldstärke aufweisen muss, um zu einem ausreichend schlechten SNR zu führen und geschützt zu werden.

Schwager et al. "Potential of Broadband Power Line Home Networking" (Consumer Communications and Networking Conference 2005, IEEE, Seiten 359 bis 363) offenbart, dass durch Setzen eines Notches bei Detektion eines Kurzwellenradiosignals das Radiosignal geschützt wird. Hierzu wird das genutzte PLC-Spektrum fortwährend nach Radiosignalen überwacht. Bei Erkennen eines Radiosignals wird der Subkanal des PLC-Signals, in den das erkannte Radiosignal fällt, ausgelassen.

Der vorliegenden Erfindung liegt daher die Aufgabe zugrunde, ein Verfahren der eingangs genannten Art derart auszugestalten und weiterzubilden, dass die Frequenzen, die im PLC-Signal ausgelassen werden sollen, und somit die Notching-Parameter auch bei laufendem PLC-System bestimmt werden können. Ein entsprechendes PLC-System soll angegeben werden.

Die zuvor aufgezeigte Aufgabe wird durch die Merkmale des Anspruchs 1 gelöst. Danach ist das in Rede stehende Verfahren dadurch gekennzeichnet, dass zumindest für einen Bereich des PLC-Signals ein Nutzsignal-zu-Interferenz-Leistungsverhältnis (SIR) gebildet wird, dass abhängig von dem SIR die Signalstärke eines Funksignals bewertet wird und dass basierend auf die Bewertung Notching-Parameter bestimmt oder angepasst werden.

Hinsichtlich eines PLC-Systems ist die zuvor aufgezeigte Aufgabe durch die Merkmale des Anspruchs 9 gelöst. Danach ist das in Rede stehende PLC-System dadurch gekennzeichnet, dass das PLC-System eine Messeinheit zum Messen eines Signal-zu-Interferenz-Verhältnisses (SIR) eines PLC-Signals aufweist, dass die Messeinheit mit einer Bewertungseinheit zum Bewerten des gemessenen SIRs verbunden ist und dass die Konfigurationseinheit zum Bestimmen oder Anpassen von Notching-Parametern basierend auf die Bewertungen der Bewertungseinheit mit der Bewertungseinheit verbunden ist.

In erfindungsgemäßer Weise ist zunächst erkannt worden, dass für die Bestimmung von Notching-Parametern in einem PLC-System nicht zwangsläufig eine teilweise oder gar vollständige Inaktivität des PLC-Systems notwendig ist. Vielmehr ist es möglich, das Vorhandensein eventuell interferierender Funksignale auch im laufenden Betrieb des PLC-Systems zu bestimmen. Hierzu wird erfindungsgemäß ein Nutzsignal-zu-Interferenzverhältnis (SIR; Signal Interference Ratio) bestimmt. Das SIR ist definiert als der Quotient zwischen der durchschnittlichen Leistung, die als auf einem Träger moduliertes Nutzsignal empfangen wird, und der durchschnittlichen Interferenzleistung, die auf dem gleichen Träger empfangen wird und nicht von dem Nutzsignal herrührt. Das SIR wird üblicherweise verwendet, um das Übersprechen verschiedener Systeme oder Teilkomponenten zu beschreiben. Erfindungsgemäß kann das SIR auch im Zusammenhang mit der Bestimmung von Notching-Parametern verwendet werden. Die über das PLC-Signal übertragenen Nutzdaten werden dabei in das Verhältnis zu den eingestreuten Signalen gesetzt. Auf diese Weise lässt sich die Leistung bestimmen, die nicht von dem durch den sendenden Knoten gesendeten PLC-Signal herrühren. Diese Signalanteile können von den verschiedensten Quellen kommen. Eine Möglichkeit ist, dass ein Funksignal vorliegt, das mit dem PLC-Signal interferiert.

Erfindungsgemäß wird abhängig von dem SIR die Signalstärke bewertet, die von einem interferierenden Signal, meist einem Funksignal, herrührt. Basierend auf der Bewertung der Signalstärke werden Notching-Parameter bestimmt. Wiederum basierend auf den Notching-Parametern können Notches implementiert werden, durch die das PLC-Signal nach Aktivierung der Notches in dem Bereich um das interferierende Funksignal herum keine wesentlichen Signalanteile mehr aufweist. Auf diese Weise kann eine weitere Interferenz des PLC-Signals mit dem Funksignal vermieden werden.

Sollte ein Funksignal detektiert werden, das sehr nahe am einem bereits gesetzten Notch liegt, so können die Notching-Parameter des betreffenden Notches derart angepasst werden, dass der Notch nach der Anpassung der Notching-Parameter auch das neuerlich detektierte Funksignal mitabdeckt. Notching-Parameter können die Mittelfrequenz, die Breite oder die Steilheit des Notches sein. Häufig werden die Notches als digitale Filter implementiert sein.

Nach Setzten eines Notches kann regelmäßig überprüft werden, ob in dem durch das PLC-Signal ausgesparten Frequenzbereich noch eine Aktivität eines Funksignals vorhanden ist. Sollte dies verneint werden, kann prinzipiell der Notch wieder deaktiviert und der Frequenzbereich durch das PLC-Signal wieder genutzt werden. Hierbei kann eine gewisse Zeit der Inaktivität des Funksignals abgewartet werden, bis der Notch deaktiviert wird. Die zu dem Notch gehörenden Notching-Parameter können prinzipiell gelöscht werden.

Vorzugsweise wird zur Bestimmung des SIR ein PLC-Empfangssignal verwendet, das bei einem Knoten des PLC-Systems empfangen wird. Dadurch ist es auf einfache Art und Weise möglich, das SIR zu bestimmen, ohne besondere Messsignale einbringen zu müssen. Ferner ist zu erkennen, dass eine Inaktivität des PLC-Systems in diese Implementierung sogar ungewünscht ist, da in dem PLC-System Daten an den Knoten gesendet werden müssen, um das SIR und damit die Basis für die Bewertung eines evtl. interferierenden Funksignals zu bestimmen.

Nach einer Ausgestaltung kann der Knoten durch einen Knoten im Access-Netzwerk gebildet sein. Als Access-Netzwerk werden die Teile eines Netzwerks bezeichnet, über die der Zugriff auf das Netzwerk eines Betreibers ermöglicht wird. Über dieses Netzwerk werden beispielsweise Daten an das Internet oder an entfernte Teilnehmer gesendet. Das Access-Netzwerk wird meist von dem lokalen Netzwerk des Nutzer unterschieden und endet nutzerseitig am Übergabepunkt an den Nutzer, Durch eine Implementierung der Interferenz-Detektierung im Access-Netzwerk besteht die Möglichkeit, in einem größeren Netzwerk zentral die Notching-Parameter zu bestimmen und damit die durch das PLC genutzten Frequenzen zu beeinflussen.

In einer anderen Ausgestaltung kann der Knoten, über dessen PLC-Empfangssignal das SIR bestimmt wird, durch ein Gerät eines Endbenutzers gebildet sein. Hier kann beispielsweise ein BPL (Breitbandpowerline)-Modem genutzt werden. Auch in diesem Fall ist eine PLC-Aktivität gewünscht, um das SIR zu bestimmen. Eine Implementierung der Bestimmung des SIR in einem Nutzergerät bietet den Vorteil, dass die Bestimmung der Notching-Parameter wesentlich granularer durchgeführt werden kann. Damit können lokal sehr unterschiedlich verfügbare Funksignale detektiert und entsprechend geschützt werden.

Die beiden zuvor dargelegten Ausgestaltungen lassen sich auch beliebig kombinieren. So könnte beispielsweise eine Grobdetektierung im Access-Netzwerk durchgeführt werden, wobei dort zur Bewertung eine höhere Signalleistung vorausgesetzt sein könnte. Über eine Feindetektierung bei einem BPL-Modem könnten dann schwächere, aber dennoch mit ausreichender Signalqualität vorhandene weitere Funksignale gefiltert und geschützt werden. Andere Ausgestaltungen von Kombinationsmöglichkeiten sind denkbar und erschließen sich einem Fachmann.

Vorzugsweise wird durch das erfindungsgemäße Verfahren bestimmt, ob ein Funksignal über eine ausreichende Signalstärke verfügt, um bei einem handelsüblichen Empfänger für das jeweilige Funksignal empfangen und verwertet zu werden. Hierbei kann von einem empfindlichen, aber dennoch handelsüblichen Empfänger ausgegangen werden. Weist das Funksignal eine entsprechende Mindestfeldstärke nicht auf, so kann das Funksignal als nicht verwertbar klassifiziert werden und es werden keine Notching-Parameter bestimmt. Weist das Funksignal hingegen eine Mindestfeldstärke auf, so würden entsprechende Notching-Parameter bestimmt und basierend auf die Notching-Parameter Notches implementiert.

Die Funksignale könnten durch Radiosender erzeugt sein. Bei dem Frequenzbereich, der bei derzeit gebräuchlichen PLC-Systemen verwendet wird, sind dies KurzwellenRadiosender. Neben Radiosendern wäre es auch denkbar, dass das Funksignal durch andere Sender gebildet ist, die für andere Funkdienste genutzt werden und nicht der Übertragung von Radiosendern dienen.

Vorzugsweise wird bei Unterschreiten eines Grenzwertes durch das SIR für das Vorliegen eines empfangbaren Funksignals entschieden. Das Unterschreiten eines definierten Grenzwertes bedeutet bei Annahme einer konstanten Nutzsignalenergie, dass die Interferenz, d.h. die Leistung eines eingestreuten Funksignals angestiegen ist. Der Grenzwert lässt sich relativ frei definieren, er kann jedoch durch Standards oder Gesetze entsprechende Randbedingungen erfüllen müssen. Im Allgemeinen hängt der Grenzwert von der Energie des Nutzsignals und dem für die Empfangbarkeit eines Funksignals definierten Schwellenwerts ab. Bei Unterschreiten des derart definierten Grenzwertes durch das SIR wird dann für das Vorliegen eines empfangbaren Funksignals entscheiden, das entsprechend geschützt werden muss. Die zum Schutz des Funksignals notwendigen Notching-Parameter werden bestimmt oder angepasst und ein auf die Notching-Parameter basierendes Notch implementiert.

Da ein PLC-Signal in verschiedene Subträger aufgegliedert ist, könnte, insbesondere zur Verbesserung der Messergebnisse, das SIR jeweils für einen Subträger bestimmt werden. Auf diese Weise könnte die in dem Subträger im Mittel übertragene Signalenergie in das Verhältnis zur Interferenz gesetzt werden. Dies bietet insbesondere bezüglich der Vereinfachung der Berechnung und hinsichtlich der Granularität Vorteile. Ferner ließe sich ein Notch in erster Näherung dadurch implementieren, dass der jeweilige Sub-Träger nicht verwendet wird.

Für die Bewertung des SIR könnten systeminterne Parameter des BPL-Systems genutzt werden. So liegen beispielsweise bei dem Empfänger eines PLC-Signals Informationen über die Nutzsignalqualität vor, wodurch die Bestimmung des SIR begünstigt werden kann.

Zur Bestimmung des SIR ist es notwendig, das Nutzsignal oder zumindest die damit übertragene Energie zu bestimmen. Dies könnte auf verschiedene Arten geschehen. So wäre es möglich, die Nutzsignalenergie beim Sender des PLC-Signals zu bestimmen und diese Information in geeigneter Weise an den Empfänger des PLC-Signals zu übertragen. Das gesendete PLC-Signal müsste dann unter Verwendung eines Kanalmodells umgerechnet werden, so dass beispielsweise Kanaldämpfungen in das SIR einfließen können.

Eine andere Möglichkeit der Gewinnung des Nutzsignals besteht darin, das mit dem Nutzsignal empfangene Symbol zu berücksichtigen. Hierzu würde zunächst das empfangene Symbol aus dem Nutzsignal demoduliert. Vorzugsweise wird danach eine Fehlerkennung und gegebenenfalls eine Fehlerkorrektur durchgeführt. Informationen über fehlerhaft empfangene Symbole können auch aus Informationen bei dem jeweiligen Empfänger des PLC-Signals extrahiert werden. Das empfangene und gegebenenfalls fehlerkorrigierte Symbol würde entsprechend der Modulierung des empfangenen PLC-Nutzsignals moduliert. Das auf diese Weise rekonstruierte durch den Sender des PLC-Signals am wahrscheinlichsten gesendete Nutzsignal ließe sich entsprechend der Eigenschaften des Übertragungskanals korrigieren. Hierzu können Informationen genutzt werden, die für den Betrieb eines PLC-Systems ohnehin vorliegen, wie beispielsweise die Dämpfung eines Sendesignals auf dem Weg zum Empfänger. Eine konkrete Implementierung eines derartigen Systems ist beispielsweise in der DE 10 2010 051 710 beschrieben, auf die hiermit ausdrücklich Bezug genommen wird.

Zusammenfassend kann also festgehalten werden, dass bei dem erfindungsgemäßen Verfahren und dem erfindungsgemäßen PLC-System Messungen im PLC-Signal vorgenommen werden. Das Verfahren ist unabhängig von Modulation und Zugriffsverfahren.

Eine besonders bevorzugte Ausgestaltung der Erfindung zeichnet sich dadurch aus, dass das BPL-Empfangssignal zur Detektion der Signalstärke des "schützenswerten" Kurzwellen-Rundfunkfrequenz genutzt wird. Die Detektion selbst geschieht mit der Messung und Bewertung von Nutz- zu Interferenz-Leistungsverhältnissen im BPL-Empfangssignal.

Dies kann mit und ohne Zuhilfenahme interner BPL-System Parameter geschehen.

Das Verfahren kann in allen BPL Chips/Systemen (Inhouse und Access) implementiert werden.

Hinsichtlich weiterer vorteilhafter Ausgestaltungen der erfindungsgemäßen Vorrichtung wird zur Vermeidung von Wiederholungen auf den allgemeinen Teil der Beschreibung sowie auf die beigefügten Patentansprüche verwiesen.

Schließlich sei ausdrücklich darauf hingewiesen, dass die voranstehend beschriebenen Ausführungsbeispiele der erfindungsgemäßen Vorrichtung lediglich zur Erörterung der beanspruchten Lehre dienen, diese jedoch nicht auf die Ausführungsbeispiele einschränken.

## Patentansprüche

1. Verfahren zum Bestimmen von Notching-Parametern für ein Powerline Communication-Signal - PLC-Signal - in einem PLC-System, wobei durch das Notching gezielt Frequenzbereiche im PLC-Signal ausgelassen werden und wobei die Notching-Parameter derart gewählt werden, dass eine Interferenz des PLC-Signals mit einem Funksignal weitgehend vermieden wird,
wobei zumindest für einen Bereich des PLC-Signals ein Nutzsignal-zu-Interferenz-Leistungsverhältnis - SIR - gebildet wird, wobei abhängig von dem SIR die Signalstärke eines interferierenden Funksignals bewertet wird, wobei basierend auf die Bewertung Notching-Parameter bestimmt oder angepasst werden,
wobei basierend auf den Notching-Parametern Notches implementiert werden, durch die das PLC-Signal nach Aktivierung der Notches in einem Bereich um das interferierende Funksignal herum keine wesentlichen Signalanteile aufweist und eine weitere Interferenz des PLC-Signals mit dem Funksignal vermieden wird, und **dadurch gekennzeichnet,** das
zur Bestimmung des SIR ein PLC-Empfangssignal verwendet wird, wobei das PLC-Empfangssignal bei einem Knoten des PLC-Systems empfangen wird, wobei als PLC-Empfangssignal das bei einem Knoten im Access-Netzwerk empfangene PLC-Signal genutzt wird, wodurch die Notching-Parameter zentral für ein PLC-Netzwerk bestimmt werden.

2. Verfahren nach Anspruch 1, **dadurch gekennzeichnet, dass** als PLC-Empfangssignal das bei einem Nutzergerät empfangene PLC-Signal genutzt wird, wobei das Nutzergerät vorzugsweise durch ein BPL-Modem gebildet ist.

3. Verfahren nach Anspruch 1 oder 2, **dadurch gekennzeichnet, dass** bei Unterschreiten eines definierten Grenzwertes durch das SIR für das Vorliegen eines empfangbaren Funksignals entschieden wird und die für einen Notch notwendigen Notching-Parameter zum Schutz des Funksignals bestimmt oder angepasst werden.

4. Verfahren nach einem der Ansprüche 1 bis 3, **dadurch gekennzeichnet, dass** das SIR für jeden zu bewertenden Subträger des PLC-Signals bestimmt wird.

5. Verfahren nach einem der Ansprüche 1 bis 4, **dadurch gekennzeichnet, dass** für die Bewertung des SIR systeminterne Parameter des BPL-Systems mitbenutzt werden.

6. Verfahren nach einem der Ansprüche 1 bis 5, **dadurch gekennzeichnet, dass** zur Bestimmung eines Nutzsignals das mit dem Nutzsignal empfangene Symbol demoduliert wird, wobei vorzugsweise für das empfangene Symbol eine Fehlererkennung und/oder -korrektur durchgeführt wird, und dass basierend auf das empfangene und gegebenenfalls fehlerkorrigierte Symbol das ursprünglich gesendete Nutzsignal rekonstruiert wird.

7. PLC-System mit einer Konfigurationseinheit zum Bestimmen von Notching-Parametern, wobei mindestens ein Knoten des PLC-Systems durch die Notching-Parameter derart beeinflussbar ist, dass in dem durch den Knoten ausgesendeten PLC-Signal zur Vermeidung einer Interferenz des durch den Knoten ausgesendeten PLC-Signals mit einem interferierenden Funksignal gezielt Frequenzbereiche ausgelassen sind,
wobei **dadurch gekennzeichnet, dass** das PLC-System eine Messeinheit zum Messen eines Signal-zu-Interferenz-Verhältnisses - SIR - eines PLC-Signals aufweist, wobei die Messeinheit mit einer Bewertungseinheit zum Bewerten des gemessenen SIRs verbunden ist und wobei die Konfigurationseinheit zum Bestimmen oder Anpassen von Notching-Parametern basierend auf die Bewertungen der Bewertungseinheit mit der Bewertungseinheit verbunden ist, wobei basierend auf den Notching-Parametern Notches implementiert werden, durch die das PLC-Signal nach Aktivierung der Notches in einem Bereich um das interferierende Funksignal herum keine wesentlichen Signalanteile aufweist und eine weitere Interferenz des PLC-Signals mit dem Funksignal vermieden wird, und
**dadurch gekennzeichnet, dass** zur Bestimmung des SIR ein PLC-Empfangssignal verwendet wird, wobei das PLC-Empfangssignal bei einem Knoten des PLC-Systems empfangen wird, wobei als PLC-Empfangssignal das bei einem Knoten im Access-Netzwerk empfangene PLC-Signal genutzt wird, wodurch die Notching-Parameter zentral für ein PLC-Netzwerk bestimmt werden.

## Claims

1. Method for determining notching parameters for a powerline communication signal - PLC signal - in a PLC system, wherein frequency ranges in the PLC signal are selectively omitted as a result of the notching and wherein the notching parameters are selected in such a manner that an interference of the PLC signal with a radio signal is substantially avoided,
wherein at least for a range of the PLC signal a utility signal to interference power ratio - SIR - is formed, wherein, depending on the SIR, the signal strength of an interfering radio signal is evaluated, wherein, based on the evaluation, notching parameters are determined or adapted,
wherein, based on the notching parameters, there are implemented notches, by means of which the PLC signal after activation of the notches in a range around the interfering radio signal has no significant signal portions and another interference of the PLC signal with the radio signal is prevented, and
**characterised in that**, in order to determine the SIR, a PLC reception signal is used, wherein the PLC reception signal is received at a node of the PLC system, wherein the PLC signal which is received at a node in the access network is used as a PLC reception signal, whereby the notching parameters are centrally determined for a PLC network.

2. Method according to claim 1, **characterised in that** the PLC signal which is received at a user device is used as a PLC reception signal, wherein the user device is preferably formed by a BPL modem.

3. Method according to claim 1 or 2, **characterised in that**, when the value falls below a defined limit value, the SIR decides that a receivable radio signal is present and the notching parameters which are required for a notch in order to protect the radio signal are determined or adapted.

4. Method according to any one of claims 1 to 3, **characterised in that** the SIR is determined for each sub-carrier of the PLC signal to be determined.

5. Method according to any one of claims 1 to 4, **characterised in that** system-internal parameters of the BPL system are also used for the evaluation of the SIR.

6. Method according to any one of claims 1 to 5, **characterised in that**, in order to determine a utility signal, the symbol received with the utility signal is demodulated, wherein for the symbol received an error identification and/or correction is preferably carried out, and **in that**, based on the symbol which is received and where applicable error-corrected, the originally transmitted utility signal is reconstructed.

7. PLC system having a configuration unit for determining notching parameters, wherein at least one node of the PLC system can be influenced by means of the notching parameters in such a manner that in the PLC signal transmitted by the node, in order to prevent interference of the PLC signal transmitted by the node with an interfering radio signal, frequency ranges are selectively omitted,
wherein the PLC system has a measurement unit for measuring a signal to interference ratio - SIR - of a PLC signal, wherein the measurement unit is connected to an evaluation unit in order to evaluate the measured SIR and the configuration unit is connected to the evaluation unit in order to determine or adapt notching parameters based on the evaluations of the evaluation unit, wherein, based on the notching parameters, there are implemented notches by means of which the PLC signal after activation of the notches in a range around the interfering radio signal has no significant signal portions and additional interference of the PLC signal with the radio signal is prevented, and
**characterised in that**, in order to determine the SIR, a PLC reception signal is used, wherein the PLC reception signal is received at a node of the PLC system, wherein the PLC signal received at a node in the access network is used as a PLC reception signal, whereby the notching parameters are determined centrally for a PLC network.

## Revendications

1. Procédé de détermination de paramètres d'élimination de bande étroite pour un signal de courants porteurs en lignes (signal CPL) dans un système CPL, l'élimination de bande étroite éliminant de façon ciblée des gammes de fréquence dans le signal CPL, et les paramètres d'élimination de bande étroite étant choisis de telle sorte qu'une interférence du signal CPL avec un signal radio est largement évitée,
un rapport de puissance signal utile sur interférence (SIR) étant formé au moins pour une plage du signal CPL, l'intensité de signal d'un signal radio interférant étant évaluée en fonction du SIR, des paramètres d'élimination de bande étroite étant déterminés ou adaptés sur la base de l'évaluation,
des notch étant mis en oeuvre sur la base des paramètres d'élimination de bande étroite, sous l'action desquels le signal CPL ne présente pas de fractions de signal importantes après l'activation du notch dans une plage autour du signal radio interférant, et une autre interférence complémentaire du signal CPL avec le signal radio interférant est évitée, et
**caractérisé en ce que**,
pour la détermination du SIR, il est utilisé un signal de réception CPL, le signal de réception CPL étant reçu au niveau d'un noeud du système CPL, le signal CPL reçu au niveau d'un noeud dans le réseau d'accès étant utilisé en tant que signal de réception CPL, ce qui fait que les paramètres d'élimination de bande étroite sont déterminés de façon centralisée pour un réseau CPL.

2. Procédé selon la revendication 1, **caractérisé en ce que** le signal CPL reçu au niveau d'un appareil utilisateur est utilisé en tant que signal de réception CPL, l'appareil utilisateur étant de préférence formé d'un modem BPL.

3. Procédé selon la revendication 1 ou 2, **caractérisé en ce que**, lors du passage sous une valeur limitée définie par le SIR, il est décidé qu'il existe un signal radio pouvant être reçu, et les paramètres d'élimination de bande étroite nécessaires pour un notch sont déterminés ou adaptés pour la protection du signal radio.

4. Procédé selon l'une des revendications 1 à 3, **caractérisé en ce que** le SIR est déterminé pour chaque sous-porteuse à évaluer du signal CPL.

5. Procédé selon l'une des revendications 1 à 4, **caractérisé en ce que** des paramètres, internes au système, du système CPL sont utilisés conjointement pour l'évaluation du SIR.

6. Procédé selon l'une des revendications 1 à 5, **caractérisé en ce que**, pour la détermination d'un signal utile, le symbole reçu avec le signal utile est démodulé, une détection et/ou correction d'erreur étant effectuée de préférence pour le symbole reçu, et **en ce que**, sur la base du symbole reçu et dont l'erreur éventuelle est corrigée, le signal utile envoyé initialement est reconstruit.

7. Système CPL avec une unité de configuration pour la détermination de paramètres d'élimination de bande étroite, au moins un noeud du système CPL pouvant être influencé par les paramètres d'élimination de bande étroite de telle sorte que, dans le signal CPL émis par le noeud pour l'évitement d'une interférence du signal CPL émis par le noeud avec un signal radio interférant, des plages de fréquence sont éliminées de façon ciblée, le système CPL présentant une unité de mesure pour la mesure d'un rapport de puissance signal utile sur interférence (SIR), l'unité de mesure étant raccordée à une unité d'évaluation pour l'évaluation du SIR mesuré, et l'unité de configuration étant raccordée à l'unité d'évaluation pour la détermination ou l'adaptation de paramètres d'élimination de bande étroite sur la base des évaluation de l'unité d'évaluation, des notch étant mis en oeuvre sur la base des paramètres d'élimination de bande étroite, sous l'action desquels le signal CPL ne présente pas de fractions de signal importantes après l'activation du notch dans une plage autour du signal radio interférant, et une autre interférence du signal CPL avec le signal radio interférant est évitée, et
**caractérisé en ce que**, pour la détermination du SIR, il est utilisé un signal de réception CPL, le signal de réception CPL étant reçu au niveau d'un noeud du système CPL, le signal CPL reçu au niveau d'un noeud dans le réseau d'accès étant utilisé en tant que signal de réception CPL, ce qui fait que les paramètres d'élimination de bande étroite sont déterminés de façon centralisée pour un réseau CPL.
